# EUROPEAN PATENT APPLICATION

(11) **EP 2 267 319 A1**
(43) Date of publication of application: **29.12.2010**
(21) Application number: 09008263.7
(22) Date of filing: 24.06.2009
(51) Int. Cl.: F16B 2/24, B65D 1/00

(54) **Rapid clip**

(71) Applicant: Talleres Anbla S.L., CP 27290 Lugo (ES)
(72) Inventor: Blanco, Lopez, Antonio, 27290 Lugo (ES)

(57) **Abstract**

The essential characteristic of this clip, is that realizes the subjection of two elements, making a joint with 90 degrees on the edges, that in addition to the holding effect, it holds one against another by the action of the spring, and which is an added value because of the hold effect, so the packaging is much safer when possible falls and its dismounting. The material, thickness an size of the device make tools or machinery unnecessary to use it, since it can be mounted or dismounted by hand, although it is also possible to use common hand tools.

The characteristic intended to protect the utility model is the device's form of functioning, for the rest of products existing on market contrariwise, this one has a spring which enables the subjection of the elements to join and the handmade-mounting of RAPID CLIP with the elements to manufacture a packaging.

## Description

This invention refers to a device called, hereafter, RAPID-CLIP, who provides subjection for panels and/or boards from wooden massive, or plywood and/or cardboard or any other sufficiently rigid material and resistant to manufacture a container or packing, which has been conceived and realized to obtain a subjection capability in the three space bearings, in order to increase the intensity of fixing efforts, as well as making it easy to use, in relation to its manual montage and the capability to accomplish the fixing in materials which may go increasing the slot, in which one they are fastened , by the own properties and the effort it supports.

RAPID CLIP allows to assemble and disassemble protective and ready-to-freight packaging by hand in parallelepiped shape, cubic shape, or prism shape, made in any kind of material, in a quick and simple way, without any additional devices. Through the application of this device on the edge of the different side ones and the lid of the packaging, allows clipping together the corners in a 90 degree angle.

Due to its design it exists a wide fringe of tolerances to its assembling, so much in the dimensions of the own device as in the material holes which it grips to, just due to its elastic capability which allows the movement in the three spatial axes.

### BACKGROUND OF INVENTION

There are known numerous devices to execute the grip of panels to conform wooden packaging o packaging made out of another material.

In such sense can be related other devices which joint panels in the same way, by the borders, forming edges among themselves with planes that form 90 degrees among themselves. The form in angle of 90 degrees of the device is common in all of them.

In order to the panels do not get separated, all suchlike devices have in their farthest ends, a hook-like shape or flap shape which enters in a crack or material's hole, which allows they get hooked in to the perpendicular border to the plane they are included in, joining the panels and avoiding separation among them.

All suchlike devices are placed under pressure in the border of the practised crack in the material. Some of them, even need accessory pieces which are installed in the panels that will conform the wall sides of the packaging, to ensure the correctly grasp of the these ones.

### DESCRIPTION OF THE INVENTION

The invention's device consists in a phosphatized steel wire which adequately molded and twisted forms a one-piece fastener.

The parts in which the device is divided are, according to its shape, and in spite of unique piece, are three: the crossbars, the flags and the spring.

The crossbars underlie the device and they are the ones that limit the distance of the crack of the elements to join to the packing's edge. The angle the crossbars form between themselves is 85 degrees. The dimension of the angle is essential for the correct functioning of the piece, because if it was 90 degrees like in all of the devices of the same kind, it would not permit improving one of its principal functions substantially.

The flaps comply the mission to fasten the device to the elements' faces to join fastening them among themselves, as they penetrate into cracks practised in the elements becoming the device hooked to them.

The spring is the RAPID CLIP's essential component, because it makes the difference with all other similar devices. The spring will be a torsional spring, which maintains the elements to join in the approximately perpendicular position that it has at rest, of 85 degrees. When the element fastens each flag in an element, and as those elements to join form an edge that has perpendicular lateral planes, a 90 degrees angle, they force the spring to stretch out until the elements are at 90 degrees angle, just placing them thus in a different position from the one they have in rest and subdued therefore to a non-stop tensioning due to the energy of deformation (or potential elastic energy) that it is submitted to, according to the law of Hooke. The spring when trying to replace elements to their initial position, causes that the flaps close against the borders of the elements, making stronger dam and therefore safer lock.

Other devices make the subjection due to the position of the limits but without applying efforts in the grip points, then they allow some looseness in the packing's edges which conform the unions of the elements.

This device, due to its extra effort the spring makes, and compared with another devices, allows to exist short variations in the size of the cracks they fasten, just because the cracks are made without precision, or due to the characteristics of the material. Just because the device has been mostly invented to manufacture a wooden board packaging and tree-plywood, its shape and elasticity make it suitable for these materials, as due to the variations of humidity the material can suffer, and due to its coefficients of dilatation, sometimes variations in the size and relative position of the cracks with respect to the borders of several millimetres can exist.

Whenever will exist variations in the size and width of cracks, other devices would not work, because they will fit in too tight, or too loose-fitting, not allowing the flaps to grid correctly to the cracks' borders. In the case of this device, the size variation will imply a more or less force of subjection, but will always work out, just because the angle the crossbars form, 85 degrees, is invented to allow loose-fittings until 4 millimetres in the cracks.

In order to check the efficiency of this device, there have been made several essays which consists in let a wooden packing, manufactured with the RAPID CLIP and another devices, fall to the ground, to compare the resistance among them, and the result is that the RAPID CLIP-made packaging had suffer no deteriorations, while the ones which had been manufactured with another kind of devices, they easily get disassembled, tearing apart the packaging.

Finally, due to the space the coil spring occupies, in order to not to stumble with the edge that form the two elements to join, it is necessary to make two cuts in each element, where the spring's two ledges are going to fit in. This means that the panels are not allowed to slide one against the other, because the very spring works like a cap, making the packaging more resistant and secure. In order to complement the following description and in order to assist in a best understanding of characteristics of invention, it is attached with this description a working scheme which will helps more easily to understand the innovations and advantages in the invented device.

### BRIEF DESCRIPTION OF THE FIGURES

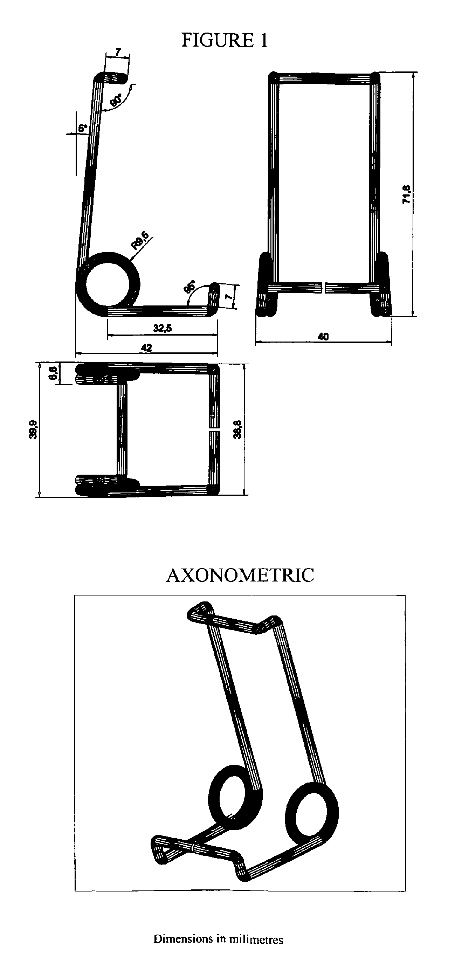

Figure 1: Shows the device's dimensions and the angles that the different parts have among them.

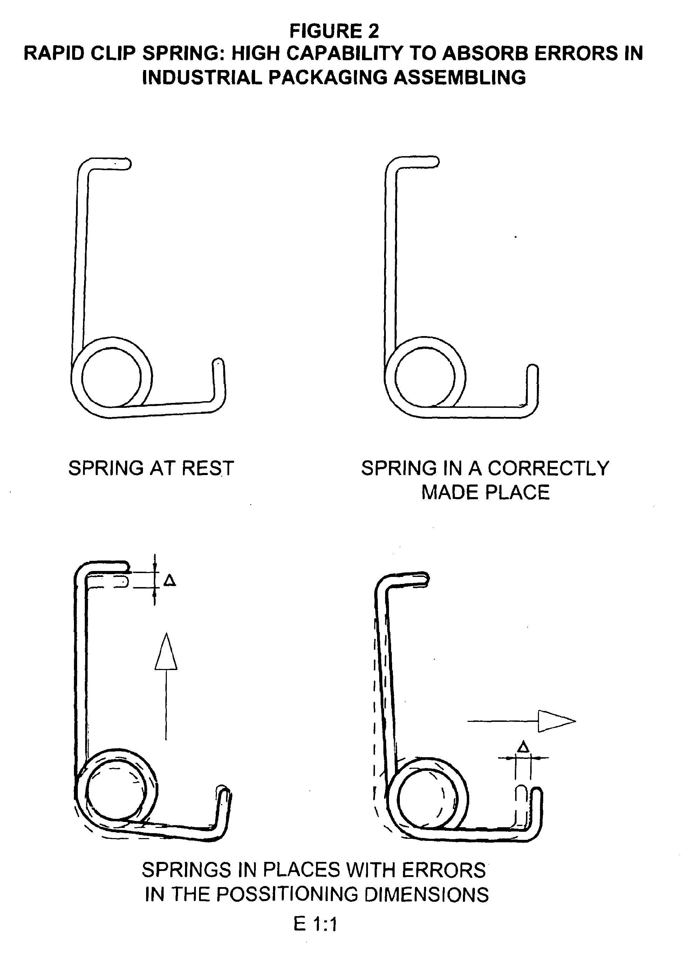

Figure 2: Evidence the elastic capability of the device, thanks to the spring. The piece can assume errors in the dimensions of the cracks, because he can stretch out and shrink thanks to the spring that it incorporates.

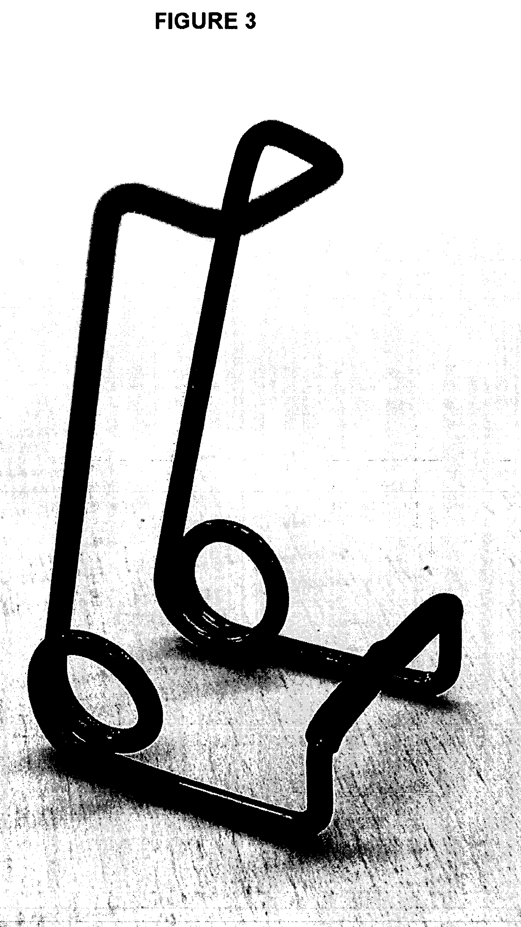

Figure 3: It shows a photograph of the spring.

### DESCRIPTION OF A DESIRABLE KIND OF REALISATION

The device is made out of a phosphatized steel wire 3 mm diameter, adequately twisted and bended to obtain the shape showed in planes. The dimensions of the RAPID CLIP can be variable and generally it is always built with phosphatized steel with a 3milimetres diameter, although it can vary. The 3 millimetres wire enables the ideal resistance, as the clip can stretch itself to realize the fitting well in the wood by hand, without making excessive efforts neither use tools, so that this wire gets a very secure device which will reduce widely the danger of suffering an accident during its utilization.

The spring coil is obtained turning the wire around a transversal axis. The dimension of this spring, with a minimum inner diameter of 18 millimetres, it is also essential to define the resistance of RAPID CLIP, since just like the wire's thickness, allows its utilization by hand without needing tools or excessive efforts. The fact the spring would have a bigger diameter, it would suppose that RAPID CLIP would become too elastic, making the grasp effort of the flaps smaller. If this spring was smaller it would become more rigid, making more difficult his manual utilization.

RAPID CLIP has therefore one part which forms a spring, which is what characterizes it specially and distinguish it from the rest of existent devices that accomplish similar functions.

## Claims

1. The subjection element for panels made out of any kind of material and shapes, forming adjoining edges with 90 degrees, and being the ones which are used in one single piece, without any more subjection pieces, it has a spring which allows it to have enough elasticity and to be managed by hand quickly and easily.

2. The subjection clip which realizes subjection efforts in the three space directions, perpendicular to the plane of the element to join, parallel to the plane of the element to join in the length direction, and parallel to the plane of the element in its width direction.

3. This subjection clip , due its design, allows its montage with high variability of its elements in their positioning dimensions and geometry of the cracks which makes the hold easy. This variability can be caused as well because of the properties and/or characteristics of the material the joint elements are made for, as for designing errors/manufacture errors or by precision of itself in the cracks manufacturing which allow the hold.
